(19) **Europäisches Patentamt**

**European Patent Office**

**Office européen des brevets**

(11) **EP 0 975 034 B1**

(12) **EUROPEAN PATENT SPECIFICATION**

(45) Date of publication and mention
of the grant of the patent:
**06.02.2002 Bulletin 2002/06**

(51) Int Cl.[7]: **H01M 4/24**, H01M 4/30,
H01M 10/24, H01M 4/66

(21) Application number: **98500122.1**

(22) Date of filing: **24.07.1998**

(54) **Procedure for the manufacture of negative electrodes for alkaline storage batteries and electrode so obtained**

Verfahren zur Herstellung einer negativen Elektrode für alkalische Speicherbatterien und so hergestellte Elektrode

Procédé de fabrication d'une électrode négative pour accumulateurs alcalins et électrode ainsi obtenue

(84) Designated Contracting States:
**DE FR GB**

(43) Date of publication of application:
**26.01.2000 Bulletin 2000/04**

(73) Proprietor: **SOCIEDAD ESPANOLA DEL ACUMULADOR TUDOR, S.A.**
**E-28027 Madrid (ES)**

(72) Inventors:
 • **Chacon Guadalix, Joaquin**
  **28806 Alalpardo (Madrid) (ES)**
 • **Soria Garcia-Ramos, Maria Luisa**
  **28033 Madrid (ES)**
 • **Trinidad Lopez, Francicso**
  **28804 Alcala de Henares (Madrid) (ES)**

(74) Representative: **Davila Baz, Angel**
 **c/o Clarke, Modet & Co., Goya, 11**
 **28001 Madrid (ES)**

(56) References cited:
 **EP-A- 0 460 424      EP-A- 0 599 603**
 **EP-A- 0 703 633      US-A- 5 464 654**

 • **PATENT ABSTRACTS OF JAPAN vol. 015, no. 050 (E-1030), 6 February 1991 & JP 02 281560 A (MATSUSHITA ELECTRIC IND CO LTD), 19 November 1990,**
 • **PATENT ABSTRACTS OF JAPAN vol. 013, no. 088 (E-721), 28 February 1989 & JP 63 266767 A (MATSUSHITA ELECTRIC IND CO LTD), 2 November 1988,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Field of the invention

This invention refers to a negative electrode of metallic hydrides for alkaline batteries, consisting of a porous metallic support and an active material based on an alloy of varied metals able to absorb hydrogen reversibly by means of an oxidation-reduction reaction.

The invention also refers to a process for the manufacture of such an electrode and to a process for the initial surface activation of the electrode so that it reacts with maximum efficiency.

When the electrodes are manufactured according to the present invention less internal resistance, a greater cycle capacity and a short activation time are achieved.

State of the Art

The rechargable batteries of nickel-metallic hydride substances are a relatively new technology with nominal characteristics similar to those of nickel-cadmium batteries. The main difference lies in the fact that the active electrochemical component of the nickel-metallic hydride substance batteries is hydrogen, while in the nickel-cadmium batteries it is the cadmium metal that acts as the anode when discharging..

The metallic hydride electrodes are characterised by a greater capacity to store electrochemical energy per unit weight and volume compared with the cadmium electrode. For this reason the quantity of this hydride material used as the negative electrode in the batteries of nickel-metallic hydride substances is less than in nickel-cadmium system. This allows the use of a greater volume for the positive electrode, which gives a higher capacity or a greater useful lifetime for this battery. Furthermore, by eliminating cadmium, this battery is not considered toxic, thus reducing the problems associated with the collection and recycling of the nickel-cadmium batteries.

There are many applications for nickel-metallic hydride batteries given their characteristics and benefits. The design and manufacture is carried out in line with the demands of each application. Some examples of the construction of these batteries can be found in EP 0.460.425, 0.468.568, 0.419.221 and 0.383.991 and in the patents US 5.250.368 and 5.434.019.

The active material of the negative electrode of metallic hydrides, in the charged state, is hydrogen in the form of hydrides. The alloy is capable of absorbing and desorbing the hydrogen reversibly by means of the charging and discharging of the electrode. During the discharge, the metallic hydride MH is oxidised to the corresponding metallic alloy according to the equation:

$$MH + OH^- \rightarrow M + H_2O + e^-$$

When charging the reverse reaction occurs.

A key component of the negative electrode of the metallic hydrides resides in the ability of the metallic alloy to store hydrogen. The composition of the alloy is formulated to obtain a material that will be stable during the course of a large number of charge/discharge cycles. Other important properties of this material are: a large capacity for storage of hydrogen to give the electrode a high energy density, thermodynamic properties suitable for the reversible absorption-desorption reaction, low hydrogen equilibrium pressure, high electrochemical reactivity, favourable kinetic properties for high current operation, high resistance to oxidation and stability in the alkaline electrolyte during the course of repeated cycles of charge and discharge.

Normally, two types of metallic alloys are used. The type denominated $AB_5$, whose production is described, for example, in patents US 5.242.656 and 4.983.474 and in the EP 0.587.503 and 0.608.646, is based on rare earth alloys, certain transition metals and other elements, taking $LaNi_5$ as the base compound; and type $AB_2$, whose production is described, for example, in patents US 5.348.822, 5.344.728 and 4.849.205, which consists basically of transition metal alloys, taking titanium and nickel as the base. In both cases, the base metals can be substituted with other metals in order to improve certain specific characteristics.

The alloys $AB_5$ are essentially based on the compound $LaNi_5$. The partial substitution of both metals gives rise to a stabilisation of the alloy during the course of repeated charge/discharge cycles by reducing the internal absorption and/or the production of protective surface layers. For example, the volume expansion is reduced with a partial substitution of nickel with cobalt and the interface properties improve with small quantities of aluminium or silicon. The duration of the cycles is improved by the substitution of the nickel with one of the following metals according to the following order: manganese < nickel < copper < chrome < aluminium < cobalt. The substitution of part of the rare-earth metal compound with titanium or zirconium, or other lanthanides such as neodymium and cerium help in the formation of a protective layer which increases the useful lifetime of the alloy. In practice, this has led to the use of a natural mixture of rare earths (mainly lanthanide, cerium, praseodymium and neodymium), of low cost instead of pure lanthanum. The use of this mixture has improved the functional lifetime of the alloy as has been demonstrated empirically and by means of quantitative analysis of the hydroxides of the metals of the mixture in the electrodes being tested.

The alloys $AB_2$ have improved after the use of alloys based on vanadium, titanium, zirconium and nickel. The function of each one of these is: the vanadium assures good storage of hydrogen forming hydrides and creates a surface layer of porous oxide; the zirconium stores large quantities of hydrogen, forming a passivating layer of oxide and its metallurgic properties are excellent; the titanium, just as with the zirconium, stores a large amount of hydrogen and forms passivating layers of oxides; the nickel does not store hydrogen but is resistant to oxidation and catalyses oxidation of the hydrogen. Small amounts of other elements are also added to alter some properties such as behaviour at extreme temperatures, self-discharge and the performance at high current intensities. The unique feature of these compounds lies in their disordered microstructures and the presence of multiple phases. Normally, alloys of the type $AB_2$ have a greater capacity to reversibly store hydrogen than those of the type $AB_5$.

As for the manufacture of the electrodes of metallic hydrides, there are varied mechanical methods for applying the active material, consisting of a mixture of metal alloys, such as those previously described, with certain additives, to a metallic substrate that acts as a physical and electronic support of the active material, such as those described in patents US 4.915.898, 5.284.601, 5.100.747 and 5.354.576 and in EP 0.450.112. Amongst the most used metallic substrates non-woven nickel fibre compounds stand out, as do synthetic or natural fibres covered in nickel or some other metal, metallic nickel or some other nickel-coated gauzes and foams of polymeric material covered with nickel, as described in patents DE 2.251.160 and 2.418.742, and the patents FR 2.472.842 and 80.11080 and in the US patent 4.312.670 amongst others. With regard to the additives, two types are normally used with different functions within the electrode. One of these is added to reduce the internal electrical resistance of the electrode and is normally a metal of an electron-conducting agent in the form of powder or scales, with physical and chemical properties compatible with the alloy of metallic hydrides, such as graphite or nickel, amongst others. The other is employed as an agglomerating agent for the active material itself, to give some rheological characteristics appropriate for the preparation and attachment to the structure of the support of the electrode.

Once the metallic hydride electrode has been prepared, this needs to be activated either individually or when in place in the battery as the negative electrode. There are some procedures described in the literature for the activation of the $AB_2$ alloys, which are harder to activate than the $AB_5$ alloys. These methods consist basically in introducing the electrode into aggressive environments, for example strong acidic or alkaline and/or in high temperature conditions, for certain period of time necessary to activate the surface of the active material in order to initiate the absorption of hydrogen and the formation of hydride. These methods are used frequently with the $AB_2$ alloys, while in many cases the $AB_5$ alloys can be activated just be a certain number of charge/discharge cycles after which it reaches a hundred per cent of its expected efficiency. There are some references to activation procedures for these types of alloy of metallic hydrides, such as the description in EP 0.703.633, although it is still a relatively undocumented procedure.

Although the use of this type of electrode in small battery for the consumer market is extensive throughout the world, there are still some problems in the application of electrodes of metallic hydrides as negative electrodes in batteries for industrial applications such as the power supply for electric vehicles. These problems are mainly related to the high internal resistance which arises in thick electrode designs. This prevents this type of electrode from charging and discharging at high currents, leading to cycling difficulties and low duration in these batteries' cycles and the need for activating procedures for the active material which are too complicated and costly.

Object of the invention

The object of the present invention is a negative electrode of metallic hydrides for alkaline batteries, a process for its manufacture and a process for its activation, with the aim of meeting the requirements of high power and large duration in the life cycles which are demanded by industrial applications such as vehicle traction or traction of stationary machinery, by means of a simple overall process which is low cost and short.

Description of the invention

In accordance with the first aspect, the invention provides a negative electrode for alkaline electrochemical batteries, of the type which comprise a porous substrate base of nickel or of a nickel-coated material, which acts as a support for an active material based on an alloy of metallic hydrides, characterised in that they comprise, on the porous substrate, a conducting base made up of an agglomerative material and of an electronic conducting material, and covered by a alloy layer of metallic hydrides as the active material.

In accordance with the second aspect, the invention provides a procedure for the fabrication of the aforementioned electrode, characterised in that it comprises the stages of:

- mixing an agglomerating compound and an electronic conductor, both in the form of powder, optionally in the presence of water or an organic solvent, by means of a continuous alternate mashing and rolling, in order to prepare the conducting base;
- applying this conducting base to both faces of a porous substrate of nickel or of a nickel-coated material which acts as the physical support of the electrode and as the collector of the current circulating through it;
- coating the surface thus prepared with a uniform layer of powdered metallic hydrides
- pressing the assembly so that the alloy incorporates into the structure of the conducting base; and
- activating the electrode by means of a constant current partial charge and discharge cycle, followed by partial oxidation of its surface in order to create electrochemically active centres which promote hydrogen adsorption and desorption routes.

In the procedure for the manufacture of the metallic hydride electrodes of the present invention, any powdered metallic alloy can be used which is able to absorb hydrogen generated electrochemically during the charging and to then desorb it easily during the discharge reaction. Furthermore, these alloys can have very varied grain sizes and can even combine different grain sizes in the same electrode. Preferably metallic hydride alloys of the type $AB_2$ and $AB_5$ described previously are used, with all the possible substitutions of elements contributing to the alloy, as was described earlier.

As has been discussed previously, the manufacturing process of the electrode consists, in the first instance, of the preparation of a conducting base on which the alloy of metallic hydrides in powder form is laid.

This conducting base is prepared by mixing two powdered components, a conductor and the other an agglomerating agent, by means of a method of mashing and rolling, which provides the desired structure to the mass which is formed, capable of supporting the later lamination and pressing. Sometimes a small amount of water or organic solvent such as alcohol has to be added to facilitate the mixing process.

Amongst the agglomerating agents which can be used are some natural polysaccharides or semi-synthetic polysaccharides such acacia gum, carboxymethylcellulose, ethylcellulose or hydroxypropylcellulose and some fluorinated resins such as polytetrafluorethylene, which are added in a proportion of between 0.5 and 5% with respect to the total weight of active material of the finished electrode.

What is more, amongst the conducting additives that can be used are various powdered metals, such as nickel, or carbon in its different morphological forms, such as graphite, added in a proportion of between 1 and 25% with respect to the weight of the total weight of active material in the finished electrode.

The quantities of additives used are a very important factor when it comes to defining the characteristics and performance of the electrode in terms of its internal resistance, which is related to its capacity to allow high charge and discharge currents, and to the maintenance of the structure of the active material during the course of successive cycles of charge and discharge or, in other words, the useful lifetime of the electrode.

The conducting base prepared in the aforementioned manner is laid down on both faces of a substrate which acts as a physical support of the electrode and as a collector of the current which flows through it, from the electrochemically active material and via a terminal connected to the rest of the conducting components of the battery in which the electrode is being used.

This support-conductor of the active material is composed of non-woven fibres of nickel, of alloys with a high nickel content, plastic or metal fibres coated with nickel, or any other plastic structure coated with nickel, which forms a lamina with a thickness of between 0.2 and 4.0 mm, preferably between 1.0 and 2.5 mm, and which has an overall porosity greater than 80%.

After this, the alloy of metallic hydrides in powdered form, which is the true electrochemically active material, is spread uniformly over the surface prepared according to the aforementioned process, by a simple gravity system, whereupon the assembly is pressed, with a pressure of between 1 and 10 ton/cm$^2$, thus forcing the alloy to incorporate into the structure of the conducting base prepared previously.

On some occasions, the alloy can be spread over the conducting base, and a procedure for mixing the two phases can be followed, before laying this down onto the substrate.

The quantity of metallic hydride alloy that is incorporated onto the electrode is between 70 and 98.5% with respect to the total weight of the active material in the finished electrode.

The pressure which is applied to the electrode for the adhesion of the a metallic hydride alloy to the conducting base represents an important factor with regard to the porosity and the final active surface area of the electrode, as both variables affect the efficiency of the active material.

Once the electrode has been prepared it now has to be activated. The procedure for activation in the present invention is based on a controlled partial oxidation process to create electrochemically active centres on the surface of the electrode which promote absorption and desorption routes of the hydrogen.

By means of this procedure of activation, the electrode reaches its hundred per cent electrochemical efficiency in the second charge and discharge cycle, contrary to other methods described previously in the state of the art which need at least six cycles to reach this level.

The process for the activation of the electrode according to the invention comprises the following phases:

- subjecting the electrode to a partial initial charging during a period which can vary between 30 and 120 minutes and a current less than that necessary to completely charge the electrode in one hour, in an alkaline electrolyte, preferably potassium hydroxide at a concentration of 6 M;

- subjecting the electrode to a discharge with the same current as was used in the charging until the electrode reaches a voltage of between 0.6 and 1.1 V with respect to an electrode of nickel hydroxide; and

- placing the electrode, after washing in water, in a weak current of oxygen or air, or a mixture of both, which contains between 20 and 90% oxygen, during a period of between 2 and 48 hours, in order to promote the creation of surface states in certain zones of the electrode capable of acting as catalytic points in the reaction of aborption and desorption of hydrogen.

Once the electrode has been thus activated it can be placed in the battery and offer hundred per cent electrochemical performance in its second cycle of charge and discharge, delivering powers above 200 W/kg and maintaining at least 80% of its initial capacity during more than 500 cycles.

The following non-limiting examples describe the invention.

Example 1:

Groups of 10 electrodes were prepared by cutting strips of nickel fibre substrate, characterised by a porosity of 91% and a thickness of 2.0 mm, each with a surface area of 25 cm$^2$. To each piece a ribbon of nickel was joined by electrical soldering, 0.5 cm wide and 0.1 mm thick, in order to make the contact with the external electric terminals.

The first group of electrodes (denominated A) were prepared according to the procedure described in the present invention and, in particular, a conducting base was used prepared with acacia gum and graphite, on which gravity deposited the powder of metallic hydride alloy of the type $AB_5$, after having covered both sides of previously prepared substrate with the conducting base. 2% of agglomerating agent was used, 7% of conducting additive and 91% of powdered metallic hydride alloy with respect to the weight of active material. The pressure used in the preparation of these electrodes was 3 ton/cm$^2$ and the final thickness of the electrodes was 1.7 mm.

The second group (denominated B) were prepared according to the technique of mashing and packing regularly used for other electrodes such as those of cadmium. A mixture with the same additives was prepared and the same metallic hydride alloy as in the case of the first group of electrodes, and ??? until the characteristics were achieved which would alloy it to be spread over both faces of the substrate of nickel fibres. Finally, with some steel rollers, the thickness of the electrode was adjusted to 1.7 mm.

Both groups of electrode were activated using the procedure described in the present invention.

In the electric trial of both groups it could be observed that the electrodes prepared according to the method described in the present invention performed better, especially in their behaviour at high discharge currents due to the better cohesion achieved between the active material and the conducting substrate which facilitated the reduction of the internal resistance of the electrode.

Example 2:

Two groups of 10 electrodes were prepared, using the same substrate and components and proportions of active material described in the previous example and according to the manufacturing procedure described in the present invention with the same process parameters and group names as in this first example.

One of the two groups of electrodes was activated according to the activation procedure described in the present invention and, in particular, by applying a charge for 100 minutes at a current equivalent to a tenth of the electrode's theoretical capacity, a discharge with the same parameters until a voltage of 0.6 V was reached with respect to the nickel hydroxide electrode, with the electrode in a recipient contained potassium hydroxide at a concentration of 6 M and, finally, after washing with water, leaving it in air for 5 hours. The other group was tested directly with out carrying out any previous activation.

In the electrical test, both groups showed a better electrochemical performance for the electrodes activated according to the method described in the present invention, especially by attaining the maximum discharge capacity in a smaller number of cycles of charge and discharge. This is due to the creation of points on the surface that catalyse the reactions of absorption and desorption of hydrogen, as is demonstrated by comparing the data of charge overvoltage for both groups of electrodes.

**Claims**

1. Procedure for the manufacture of negative electrodes for alkaline electric batteries, of the type which comprises a porous substance based on a nickel or nickel-coated material, which acts as a support for an active material based on an alloy of metallic hydrides, the electrodes being **characterised in that** they comprise stages of:

   - mixing an agglomerating compound and a compound which conducts electricity, both in powder form, optionally in the presence of water or an organic solvent, by means of a process of alternating continuous mashing and laminating, in order to prepare the conducting base;
   - applying this conducting base to both faces of a porous substrate of nickel or a nickel-coated material which acts as the physical support of the electrode and as the collector of the current which flows through it;
   - coating the surface prepared by the aforementioned method with a uniform layer of powdered metallic hydrides as the active material;

- pressing the whole assembly so that the alloy incorporates into the structure of the conducting base; and
- activating the electrode by means of a constant current partial charge and discharge cycle, followed by a controlled oxidation of the surface in order to create electrochemically active centres that promote paths for the absorption and desorption of hydrogen.

2. Procedure according to claim 1, **characterised in that** the stage of covering the conducting base with active material is effected by gravity.

3. Procedure according to claim 1, **characterised in that** the stage of pressing the assembly is effected at a pressure of between 1 to 10 ton/cm$^2$.

4. Procedure according to claim 1, **characterised in that** before applying the conducting base to the porous substrate, this is covered with an alloy in order to realise a mixing process between both phases, after which the stages of application to the porous substrate, pressing and activation are carried out.

5. Procedure according to claims 1 to 4, **characterised in that** the electrode activation stage comprises the following phases:

- subjecting the electrode to a partial initial charging during a period which can vary between 30 and 120 minutes and a current less than the necessary to completely charge the electrode in one hour, in an alkaline electrolyte, preferably potassium hydroxide at a concentration of 6M;
- subjecting the electrode to a discharge with the same current as was used in the charging until the electrode reaches a voltage of between 0.6 and 1.1 V with respect to an electrode of nickel hydroxide; and
- placing the electrode, after washing in water, in a weak current of oxygen or air, or a mixture of both, which contains between 20 and 90% oxygen, during a time of between 2 and 48 hours, in order to promote the creation of surface states in certain zones of the electrode capable of acting as catalytic points in the reaction of absorption and desorption of hydrogen.

6. Negative electrode for alkaline electrochemical batteries, obtained according to claims 1 to 5, **characterised in that** comprises, on a porous substrate, a conducting base constituted of an agglomerating compound and an electronic conducting compound and a covering of metallic hydride alloys as the active material, wherein:

- the agglomerating agent is a natural or semi synthetic polysaccharide or a fluorinated resin, in a percentage of between 0.5 and 5% by weight with respect to the weight of active material of the finished electrode,
- the electronic conducting agent is a metal or carbon, in its various morphological forms, in powder, at a percentage of between 1 and 25% by weight with respect to the weight of active material in the finished electrode
- the quantity of metallic hydride alloy is between 70 an 98.5% with respect to the total weight of active material of the finished electrode.

**Patentansprüche**

1. Verfahren zur Herstellung negativer Elektroden für elektrische Alkalibatterien der Bauart, die eine poröse Substanz auf der Basis von Nickel oder einem mit Nickel überzogenen Material umfasst, das als Träger für aktives Material, basierend auf einer Legierung metallischer Hydriden, wobei die Elektroden sich auszeichnen durch die Stufen:

- Mischen einer agglomerierenden Verbindung oder Zusammensetzung und einer Verbindung oder Zusammensetzung, welche elektrisch leitend ist, beide in Pulverform, und gewünschtenfalls in Anwesenheit von Wasser oder einem organischen Lösungsmittel mittels eines Verfahrens, wo abwechselnd kontinuierlich zerquetscht und laminiert wird, um die leitende Basis herzustellen;

- Aufbringen dieser leitenden Basis auf beide Flächen eines porösen Substrats aus Nickel oder einem mit Nickel überzogenen Material, das als physikalischer Träger der Elektrode und als Kollektor für den durchgehenden Strom dient;

- Überziehen der durch das oben genannte Verfahren hergestellten (Ober)fläche mit einer gleichförmigen Schicht aus gepulverten metallischen Hydriden als dem aktiven Material;

- Pressen der Gesamtanordnung, so dass die Legierung in die Struktur der leitenden Basis einverleibt wird und

- Aktivieren der Elektrode vermittels eines Partialladungsvorgangs mit konstantem Strom und eines ebensolchen Entladezyklus, gefolgt durch eine geregelte Oxidation der Oberfläche, um elektrochemisch aktive Zentren zu erzeugen, welche Bahnen für die Absorption und Desorption von Wasserstoff hervorrufen bzw.

begünstigen.

2. Verfahren nach Anspruch 1, **dadurch gekennzeichnet, dass** die Stufe des Überziehens der leitenden Basis mit aktivem Material vermittels Schwerkraft durchgeführt wird.

3. Verfahren nach Anspruch 1, **dadurch gekennzeichnet, dass** die Stufe des Pressens der Anordnung bei einem Druck zwischen 1 bis 10 t/cm$^2$ durchgeführt wird.

4. Verfahren nach Anspruch 1, **dadurch gekennzeichnet, dass** vor dem Aufbringen der leitenden Basis auf das poröse Substrat dies mit einer Legierung abgedeckt oder überzogen wird, um den Mischprozess zwischen beiden Phasen herbeizuführen, wobei anschließend die Stufen des Aufbringens des porösen Substrats, des Pressens und der Aktivierung durchgeführt werden.

5. Verfahren nach einem der Ansprüche 1 bis 4, **dadurch gekennzeichnet, dass** die Elektrodenaktivierungsstufe die folgenden Phasen umfasst:

   - Aussetzen der Elektrode einer partiellen Initial- bzw. Anfangsladung während einer Zeitdauer, die zwischen 30 und 120 Minuten variieren kann und bei einem Strom, der geringer ist als notwendig, um vollständig die Elektrode in einer Stunde in einem Alkalielektrolyt, vorzugsweise Kaliumhydroxid, bei einer Konzentration von 6 M zu laden;

   - Aussetzen der Elektrode einer Entladung mit dem gleichen Strom wie für das Laden verwendet wurde, bis die Elektrode eine Spannung zwischen 0,6 und 1,1 V, bezogen auf eine Elektrode aus Nickelhydroxid, erreicht und

   - Einsetzen der Elektrode, nach dem Waschen in Wasser, in einen schwachen Strom aus Sauerstoff oder Luft oder einem Gemisch aus beidem, der zwischen 20 und 90 % Sauerstoff enthält, und zwar während eines Zeitraums zwischen 2 und 48 Stunden, um die Erzeugung von Oberflächenzuständen in gewissen Zonen der Elektrode hervorzurufen bzw. zu begünstigen, derart, dass sie als katalytische Punkte bei der Reaktion der Absorption und Desorption von Wasserstoff wirken.

6. Negative Elektrode für elektrochemische Alkalibatterien, erhalten nach den Ansprüchen 1 bis 5, **dadurch gekennzeichnet, dass** sie auf einem porösen Substrat eine leitende Basis, die aus einer agglomerierenden Verbindung und einer elektronisch leitenden Verbindung gebildet ist, sowie eine Überdeckung aus metallischen Hydridlegierungen als aktivem Material umfasst, wobei

   - das agglomerierende Mittel ein natürliches oder halbsynthetisches Polysaccharid oder ein fluoriertes Harz in einem Anteil zwischen 0,5 und 5 Gew.-%, bezogen auf das Gewicht des aktiven Materials der fertigen Elektrode, ist,

   - das elektronisch leitende Mittel ein Metall oder Kohle in ihren verschiedenen orphologischen Formen in Pulver ist, und zwar bei einem Anteil von 1 bis 25 Gew.-%, bezogen auf das Gewicht des aktiven Materials in der fertigen Elektrode und

   - die Menge an metallischer Hydridlegierung zwischen 70 und 98,5 %, bezogen auf das Gesamtgewicht des aktiven Materials der fertigen Elektrode beträgt.

**Revendications**

1. Procédé de fabrication d'électrodes négatives pour des batteries électriques alcalines, du type qui comprend une substance poreuse basée sur un matériau en nickel ou revêtu de nickel, qui agit en tant que support d'un matériau actif basé sur un alliage d'hydrures métalliques, les électrodes étant **caractérisées en ce qu'**elles comprennent les étapes consistant à :

   - mélanger un composé agglomérant et un composé qui conduit l'électricité, tous deux sous forme de poudre, le cas échéant en présence d'eau ou d'un solvant organique, au moyen d'un procédé alternant malaxage et laminage continu afin de préparer la base conductrice ;
   - appliquer cette base conductrice sur les deux faces d'un substrat poreux en nickel ou d'un matériau revêtu de nickel qui agit en tant que support physique de l'électrode, et en tant que collecteur du courant qui circule à travers lui ;
   - revêtir la surface préparée par le procédé susmentionné d'une couche uniforme d'hydrures métalliques en poudre en tant que matériau actif ;
   - presser l'assemblage complet de telle sorte que l'alliage s'incorpore dans la structure de la base conductrice ; et
   - activer l'électrode au moyen d'un cycle de charge et de décharge partielle à courant constant, suivi par une oxydation contrôlée de la surface afin de créer des centres actifs électro-chimiquement qui procurent des passages pour l'absorption et la désorption de l'hydrogène.

**2.** Procédé selon la revendication 1, **caractérisé en ce que** l'étape consistant à recouvrir la base conductrice de matériau actif est accomplie par gravité.

**3.** Procédé selon la revendication 1, **caractérisé en ce que** l'étape consistant à presser l'assemblage est accomplie à une pression comprise entre 1 et 10 tonnes/cm$^2$.

**4.** Procédé selon la revendication 1, **caractérisé en ce que**, avant d'appliquer la base conductrice sur le substrat poreux, ce dernier est recouvert d'un alliage afin de réaliser un processus de mélange entre les deux phases, après quoi les étapes d'application sur le substrat poreux, de pressage et d'activation sont menées à bien.

**5.** Procédé selon les revendications 1 à 4, **caractérisé en ce que** l'étape d'activation de l'électrode comprend les phases suivantes consistant à :

- soumettre l'électrode à une charge initiale partielle durant une période qui peut varier entre 30 et 120 minutes, et à un courant inférieur à celui qui est nécessaire pour charger complètement l'électrode en une heure, dans un électrolyte alcalin, de préférence de l'hydroxyde de potassium à une concentration de 6M ;
- soumettre l'électrode à une décharge avec le même courant qui a servi pour le chargement, jusqu'à ce que l'électrode atteigne une tension comprise entre 0,6 et 1,1 V par rapport à une électrode en hydroxyde de nickel; et
- placer l'électrode, après l'avoir lavée dans de l'eau, dans un faible courant d'oxygène ou d'air, ou un mélange des deux, qui contient entre 20 et 90% d'oxygène, pendant une durée comprise entre 2 et 48 heures, afin de permettre la création d'états de surface dans certaines zones de l'électrode, capables d'agir en tant que points catalytiques dans la réaction d'absorption et de désorption de l'hydrogène.

**6.** Electrode négative pour des batteries électrochimiques alcalines, obtenue selon les revendications 1 à 5, **caractérisée en ce qu'**elle comprend sur un substrat poreux, une base conductrice constituée d'un composé agglomérant et d'un composé conducteur électronique, et un revêtement en alliage d'hydrures métalliques en tant que matériau actif, dans laquelle :

- l'agent agglomérant est un polysaccharide naturel ou semi-synthétique, ou une résine fluorée, dans un pourcentage compris entre 0,5 et 5% par poids, par rapport au poids du matériau actif de l'électrode finie ;
- l'agent conducteur électronique est un métal ou du carbone, sous ses diverses formes morphologiques, en poudre, à un pourcentage compris entre 1 et 25% par poids, par rapport au poids du matériau actif dans l'électrode finie ;
- la quantité d'alliage d'hydrures métalliques est comprise entre 70 et 98,5% en fonction du poids total du matériau actif de l'électrode finie.